# EUROPEAN PATENT SPECIFICATION

(11) **EP 2 221 324 B1**
(45) Date of publication and mention of the grant of the patent: **16.01.2013**
(21) Application number: 10152291.0
(22) Date of filing: 01.02.2010
(51) Int. Cl.: C08F 220/06, C11D 3/37, C08F 220/04, C08F 222/06

(54) **Process for making improved aliphatic dicarboxylic acid copolymers**
Verfahren zur Herstellung von verbesserten aliphatischen Dicarboxylsäure-Copolymeren
Procédé pour la fabrication de copolymères d'acide dicarboxylique aliphatique améliorés

(30) Priority: 18.02.2009 US 207975 P
(43) Date of publication of application: 25.08.2010
(73) Proprietor: Rohm and Haas Company, Philadelphia, Pennsylvania 19106-2399 (US)
(72) Inventor: Creamer, Marianne P., Warrington, PA 18976 (US); Manna, Joseph, Quakertown, PA 18951 (US)
(74) Representative: Buckley, Guy Julian

(56) References cited:
- EP-A2- 0 441 022
- EP-A2- 0 663 408
- US-A- 4 659 793

## Description

The present invention relates to the production of aqueous solutions or dispersions of high molecular weight, high solids copolymers of aliphatic dicarboxylic acids, especially maleic acid, with α,β-ethylenically unsaturated monomers having carboxyl or sulfonic acid groups, such as (meth)acrylic acid or 2-acrylamido-2-methyl propane sulfonic acid (AMPS), respectively, which solutions or dispersions have a very low residual content of unpolymerized dicarboxylic acid monomer. Such copolymers are useful as antiscalants, dispersants, detergent additives, deflocculants and fluid retention aids for water-based drilling fluids used in oil drilling operations.

Copolymers of aliphatic monoethylenically unsaturated mono-and dicarboxylic acids are well known and have been used as incrustation inhibitors and deflocculants in aqueous systems, and as builders in detergent compositions. Such copolymers have been prepared by copolymerizing a monoethylenically unsaturated aliphatic dicarboxylic acid, such as maleic acid, with one or more monoethylenically unsaturated monocarboxylic acids, and/or monoethylenically unsaturated sulfonic acids. Examples of monocarboxylic acid monomers are acrylic and methacrylic acid. These acid monomers are collectively referred to in the specification and appended claims as "(meth)acrylic acid".

Various processes for preparing such copolymers in an aqueous solvent system have been described in the literature. Thus, U.S. Pat. Nos. 4,659,793 discloses an improvement in the above-type processes for the copolymerization of monoethylenically unsaturated dicarboxylic acids with α,β-ethylenically unsaturated monomers, especially those having a carboxyl or sulfonic acid group, whereby the residual content of the dicarboxylic acid in the aqueous solvent system used in the polymerization is significantly reduced so as not to exceed about 0.5 percent, based on the total weight of dried copolymers. Although the art attempts to solve the problem of high amounts of residuals, the compositions of the art fail to achieve the desired higher molecular weights.

EP-A-0663408 and EP-A-0441022 disclose processes for preparation of low molecular weight polymers of monoethylenically unsaturated dicarboxylic acids.

The present invention solves the problems of the art by providing a process whereby a single charge neutralization of the reaction mixture is employed at the start of the polymerization reaction along with running the reaction mixture at high solids. This combination has been found to produce high molecular weight polymers having low residuals that also contain high end of feed solids. This combination is particularly useful in providing improved binding of laundry granules thereby preventing dusting.

Thus in the present invention there is provided a process for the manufacture of high molecular weight aliphatic dicarboxylic acid copolymers comprising:
i) providing at least one dicarboxylic acid monomer;
ii) providing at least one α,β-ethylenically unsaturated monomer selected from the group consisting of :
   (a) a monocarboxylic acid having from 3 to 10 carbon atoms and the alkali metal and ammonium salts thereof;
   (b) an organic sulfonic acid compound and the alkali metal and ammonium salts thereof;
   (c) a vinyl monomer free of carboxyl and sulfonic acid groups; and
   (d) mixtures of said (a), (b) and (c);
iii) providing at least one transition metal ion, selected from the group consisting of Zn²⁺, Co³⁺, Co²⁺, Cu²⁺, Mo²⁺, Fe³⁺, Fe²⁺, Cr³⁺, Ni²⁺, Ce⁴⁺ and Ce²⁺, and mixtures thereof, in a concentration of from 0.5 to 100 ppm, based on the total aqueous polymerization system, including monomers and initiator;
iv) feeding the at least one dicarboxylic acid, α,β-ethylenically unsaturated monomer, and an initiator into a reaction vessel wherein the pH in the reaction vessel ranges from 9.5 to 7.5
v) reacting the at least one dicarboxylic acid, α,β-ethylenically unsaturated monomer, and initiator; and
vi) producing a copolymer of aliphatic dicarboxylic acids having a calculated end of feeds solid content ranging from 46 to 60 % and a weight average molecular weight (Mw) from 70,000 to 180 ,000 daltons, as measured by gel permeation chromatography (GPC) using polyacrylic acid standards, and having a residual content ranging from 4000 to 0 ppm, the residual content being the total amount by weight of unreacted dicarboxylic acid divided by the total weight of the reaction mixture expressed in parts per million.

As applied herein, all percentages and amounts are weight percentages or amounts based on weight of the given material, and all temperatures are in °C, unless otherwise indicated. Weight percentages are based on total weight of the compound in question.

As used herein by "high molecular weight" or "increased molecular weight" is meant a weight average molecular weight greater than 70,000 up to 180,000 daltons.

As used herein by "high solids" or "high solids content" is meant calculated or measured percent solids (ie non-volatile material charged to the reaction vessel), at the end of monomer feeds to the reaction vessel.

As used herein, by "residuals" is meant the total amount by weight of unreacted dicarboxylic acid divided by the total weight of the reaction mixture expressed in parts per million.

As used herein, the term "ppm" is parts per million based upon total weight of the subj ect material.

According to the present invention, an aqueous solution of at least one monoalkali metal or monoammonium salt of a dicarboxylic acid monomer is placed in a suitable reactor and one or more water soluble salts of transition metal ions, generally as aqueous solutions, are added thereto.

Suitable monoethylenically unsaturated aliphatic dicarboxylic acids used in the present process contain from 4 to 6 carbon atoms, examples of which are maleic acid, itaconic acid, mesaconic acid, fumaric acid, methylene malonic acid, citraconic acid and their monoalkali metal or monoammonium salts. Depending upon the geometrical location of the carboxyl groups (cis position), they may be added to the aqueous solvent system in the form of their anhydrides, maleic anhydride being typical of such anhydrides. The dicarboxylic acid monomer will generally comprise from 10 to 50 percent, alternatively 35 to 45 percent, by weight of total monomers.

Suitable α,β-ethylenically unsaturated monomers which are copolymerized with the dicarboxylic acid monomers according to the process of this invention are of three particular types, namely, (a) aliphatic monocarboxylic acids having 3 to 10 carbon atoms and the alkali metal and/or ammonium salts of such acids; (b) organic sulfonic acid compounds and the alkali metal and/or ammonium salts thereof, and (c) vinyl monomers free of carboxyl and sulfonic acid groups, and mixtures of such (a), (b) and (c) monomers. The (a), (b) and (c) monomers comprise from 50 to 90 percent, alternatively from 55 to 65 percent, of said copolymers, based on the total weight of monomers. However, for solubility reasons, some of the (c) monomers do not comprise more than 30 percent of the total monomers, the remainder of the monomers being either the dicarboxylic acid or a mixture of dicarboxylic acid and (a) and/or (b) type monomers in the above-stated proportions.

The (a) type monomers include but are not limited to, acrylic and lower alkyl substituted acrylic acid such as methacrylic acid, acrylic and methacrylic acid being referred to collectively herein as "(meth)acrylic" acid, vinyl acetic acid, and the alkali metal, e.g. sodium and potassium, and ammonium salts of such monocarboxylic acids.

The (b) type monomers include, but are not limited to, allylsulphonic acid, methallylsulphonic acid, sulfonic acid monomers, such as vinylsulfonic acid, allylsulfonic acid, methallylsulfonic acid, styrene sulfonic acid, vinyltoluenesulfonic acid, acrylamido alkyl sulfonic acid, and the alkali metal and ammonium salts of such sulfonic acids.

The acrylamido alkyl sulfonic acid monomers can be prepared by well-known processes which are described in U. S. Pat. No. 3,506,707 and the patents referred to therein.

Although various derivatives which are included within the structural formula set forth above may be prepared, the monomer which has been found to be particularly suitable for use in the process of this invention is 2-acrylamido-2-methylpropane sulfonic acid, or a salt thereof, commonly referred to as "AMPS".

The third type monomer copolymerizable with the dicarboxylic acid monomer, and monomer types (a) and (b) if also present, are the vinyl monomers (c), which are free of carboxyl and sulfonic acid groups. Typical of such monomers include but are not limited to ethyl acrylate, tert-butyl acrylamide, vinyl acetate, allyl alcohol, acrylamide, N, N' 1-dimethylacrylamide, N-methylolacrylamide, N,N' 1-methylenebisacrylamide, vinyl crotonate, ethylene glycol diacrylate, tripropylene glycol diacrylate, diallyl dimethyl ammonium chloride, diallylphthalate, hydroxyethyl acrylate, hydroxyethyl methacrylate, hydroxypropyl acrylate, vinyl pyrrolidone and N-vinyl-N-methylacetamide. As noted previously, in order that the copolymers will have adequate water solubility, some of the type (c) monomers should comprise not more than 30 percent of total monomers employed to form the copolymers.

Suitable transition metal ions used in the process may be selected from the group consisting of Zn²⁺, Co³⁺, Co²⁺, Cu²⁺, Mo²⁺, Fe³⁺, Fe²⁺, Cr³⁺, Ni²⁺, Ce⁴⁺ and Ce²⁺. Mixtures of such ions may also be used.

The concentration of transition metal ions in the aqueous solvent system should be a small amount effective to reduce the residual content of the residual unpolymerized monoethylenically unsaturated dicarboxylic acid in the aqueous copolymer solution so as not to exceed 5000 ppm, by weight of dried polymers produced in the polymerization process. The transition metal ion concentration may vary from 0.5 to 100 ppm, based on the total aqueous polymerization system, including monomers and initiator. Alternatively, the transition metal ions are present at a concentration of from 0.5 to 10 ppm.

The transition metal ions may be added to the aqueous solvent system in the form of their salts and oxides which are soluble in aqueous solvent system. Suitable water soluble salts include zinc nitrate, zinc sulfate, zinc chloride, cupric acetate, cupric chloride, molybdenous chloride, cobalt (II) acetate, cobalt (II) nitrate, cobalt (III) chloride, ferric chloride, ferric sulfate, ferrous sulfate, chromium (II) acetate, chromium (II) chloride, nickel (II) sulfate, cerium (IV) sulfate, and cerium (II) nitrate. Alternatively, these salts are added to the aqueous solvent system in the form of an aqueous solution of the desired concentration.

Aqueous solutions of one or more of the (a), (b) and (c) monomers and water soluble, radical generating initiator are typically co-fed to the reaction vessel over a period of less than or equal to three hours, e.g. 2 to 3 hours or alternatively 1.5 to 2 hours. During the polymerization reaction, the aqueous solvent system containing the monomers and initiator is maintained at a temperature of from 40° to 150° C, alternatively 80° C to 100° C. If the temperature of the reaction mixture exceeds the boiling point thereof, the reaction may be carried out under pressure. An alkaline substance is charged to the system at the start of the polymerization reaction to neutralize the dicarboxylate mixture. Suitable alkaline substance include but are not limited to alkaline metal hydroxides, such as sodium hydroxide and potassium hydroxide; sodium carbonate, potassium carbonate, or lithium carbonate; ammonia; calcium hydroxide, magnesium hydroxide, or cesium hydroxide; and organic amines, such as monoethanolamine. These may be used either alone respectively or in combinations with each other.

The alkaline substance is charged in a mole amount relative to the amount of monoethylenically unsatured dicarboxylic acid (or anhydride) monomer(s). Such mole ratios range from 2.2:1 to 1.7:1 or alternatively from 2:1 to 1.8:1 of the alkaline substance (caustic) to the dicarboxylic acid monomer. The pH at the start of the monomer and initiator feed ranges from 9.5 to 7.5 or alternatively from 8 to 8.5. The pH at the completion of the monomer and initiator feed ranges from 4 to 5.5 or alternatively from 4 to 5.

Suitable water soluble, radical generating initiator are well known and generally include without limitation peroxides such as hydrogen peroxide, hydroperoxides such as t-butylhydroperoxide, and persulfates such as sodium, potassium and ammonium persulfate. Water-soluble azo initiators, such as 2,2.' 1-azobis(2-amidinopropane)hydrochloride can also be used. These initiators can be used alone or in combination. A particularly effective initiator is hydrogen peroxide alone or in combination with sodium persulfate.

The total amount of initiator(s) employed generally will be from 0.5 to 5 percent or alternatively from 1-3 percent, by weight of total monomers. A redox system can be used where lower polymerization temperatures are used. Using a redox system requires purging of the aqueous solution(s) of monomers with an inert gas, such as nitrogen. Suitable reducing agents are ascorbic acid and erythorbic acid.

Water soluble (co)polymer molecular weights reported herein, unless otherwise indicated, are weight average molecular weights, Mw, as measured by gel permeation chromatography (GPC) using polyacrylic acid standards, as is known in the art. Gel permeation chromatography, otherwise known as size exclusion chromatography, actually separates the members of a distribution of polymer chains according to their hydrodynamic size in solution rather than their molar mass. The system is then calibrated with standards of known molecular weight and composition to correlate elution time with molecular weight. The techniques of GPC are discussed in detail in Modem Size Exclusion Chromatography, W. W. Yau, J. J Kirkland, D. D. Bly; Wiley-Interscience, 1979, and in A Guide to Materials Characterization and Chemical Analysis, J. P. Sibilia; VCH, 1988, p. 81-84. The number average molecular weight (Mn) and weight average molecular weights (Mw) reported herein are in units of Daltons.

The process is carried out in the absence of organic chain transfer agents, such as isopropanol, which limit the solids content of aqueous solutions of the copolymers to 25 percent and result in high percentages of unreacted dicarboxylic acid monomer. As the completion of the polymerization reaction, the free carboxyl groups on the copolymer can be neutralized by addition of a suitable base, such as sodium hydroxide. The copolymers obtained according to the process of this invention will have a weight average molecular weight of from 70,000 to 180,000 daltons.

In order to achieve a high molecular weight low residual copolymer it is desirable to have a calculated end of feeds solids ranging from 46%-60% or alternatively 47%-55%. The residual content of the resultant of aliphatic dicarboxylic acids ranges from upper limits of 4,000 to lower limits of 0 ppm alternatively from 3000 to 0 ppm.

### EXAMPLES

### Example #1 (Weight % Composition: 55 % Acrylic Acid /45% Maleic Acid)

To a two liter round bottom flask, equipped with a mechanical stirrer, heating mantle, thermocouple, condenser and inlets for the addition of monomer and initiator was charged 161.65 grams (1.648 moles) of maleic anhydride and 238 grams of deionized water. The mixture was set to stir and 263.7 grams of 50% sodium hydroxide in water (3.296 moles NaOH) was slowly added to the flask, maintaining a temperature below 90°C. At the completion of the NaOH addition, 20 grams of deionized water was added to rinse the remaining sodium hydroxide to the flask. In the meantime, a monomer solution of 212.8 grams (2.953 moles) of glacial acrylic acid was added to a graduated cylinder for addition to the flask. An initiator solution of 2.1 grams of sodium persulfate dissolved in 20 grams of deionized water was mixed and 11.41 grams of 35% hydrogen peroxide was added to the sodium persulfate solution, mixed well and added to a syringe for addition to the kettle. A monomer pre-charge solution of 21.04 (0.291 moles) grams of glacial Acrylic Acid was placed in a vial and set aside. An initiator pre-charge solution was prepared by dissolving 1.48 grams of sodium persulfate dissolved in 8 grams of deionized water and adding 3.66 grams of 35% hydrogen peroxide, and set aside. A promoter solution of 4.5 grams of a 0.15% iron sulfate heptahydrate solution was added to a vial and set aside.

Once the kettle contents reached reaction temperature of 91 °C, the promoter solution was added, followed by the acrylic acid pre-charge. After 1 minute, the initiator pre-charge solution was added to the kettle. The expected exotherm of 2 - 5 °C was observed within 5 minutes. One minute after peak exotherm, the monomer and initiator cofeeds began and added linearly and separately over 120 minutes at 91-93°C. At the completion of the feeds, 12 grams and 4 grams of deionized water were added to the monomer and initiator feed vessels, respectively as rinses. The reaction was held for 20 minutes at 91°C. The end of feed theoretical solids was 51.2%. (The measured end of feeds solids was 52.2%). In the meantime, the a chase promoter solution of 4.5 grams of a 0.15% iron sulfate heptahydrate solution and 80 grams of deionized water was mixed and set aside. The chaser solution of 0.5 grams of sodium persulfate dissolved in 5 grams of deionized water and adding 1.42 grams of 35% hydrogen peroxide, and set aside. After 20 minute hold, the promoter solution was added to the kettle and the persulfate / peroxide solution was added to the kettle over 5 minutes. The reaction was then held for another 30 minutes. During the hold, the following solution was prepared: a scavenger solution of 11.4 grams of sodium metabisulfite dissolved in 32 grams of deionized water. After the 30 minute hold, 170 grams of deionized water was added to the kettle and cooling to 80°C was begun. The scavenger solution was then added to the kettle over 12 minutes with no external heat being applied. At the completion of the scavenger feed, the reaction was cooled to 50°C, during which time 1.0 grams of 35% hydrogen peroxide was added to the kettle to scavenge any residual bisulfite. At 50°C a solution of 145 grams of 50% sodium hydroxide was added slowly to the kettle, keeping the temperature below 70°C. A rinse of 28 gram of deionized water was then added to the sodium hydroxide funnel. The reaction was then cooled and packaged.

The final characteristics for this polymer are as follows:

**Table 1**

| | |
|---|---|
| % Solids | 39.87% |
| pH | 6.6 |
| Residual acrylic acid | 53 ppm |
| Residual maleic acid + fumaric acid | 1630 ppm |
| Mw | 94160 daltons |
| Mn | 4656 daltons |

Comparative Example #1 (Weight % Composition: 55 % Acrylic Acid /45% Maleic Acid)

The Example #1 was repeated, with the following difference:
Deionized water kettle charge was 331 grams, which yielded a theoretical end of feed solid of 46.8%. (The measured end of feeds solids was 49.15%).

The final characteristics for this polymer are as follows:

**Table 2**

| | |
|---|---|
| % Solids | 42.32% |
| pH | 6.65 |
| Residual acrylic acid | 169 ppm |
| Residual maleic acid | 5765 ppm |
| Residual fumaric acid | 378 ppm |
| Mw | 97401 daltons |
| Mn | 4202 daltons |

### Example #2 (Weight % Composition: 55 % Acrylic Acid /45% Maleic Acid)

The Example #1 was repeated, with the following differences:
Deionized water kettle charge was 188 grams, which yielded a theoretical end of feed solid was 53.1%. (The measured end of feeds solids was 52.7%).

The final characteristics for this polymer are as follows:

**Table 4**

| | |
|---|---|
| % Solids | 40.37% |
| pH | 6.41 |
| Residual acrylic acid | <1 ppm |
| Residual maleic acid | 183 ppm |
| Residual fumaric acid | <1 ppm |
| Mw | 114510 daltons |
| Mn | 8664 daltons |

### Example #3 (Weight % Composition: 60% Acrylic Acid /40% Maleic Acid)

To a two liter round bottom flask, equipped with a mechanical stirrer, heating mantle, thermocouple, condenser and inlets for the addition of monomer and initiator was charged 142 grams (1.45 moles) of maleic anhydride and 242 grams of deionized water. The mixture was set to stir and 232.4 grams of 50% sodium hydroxide in water (2.905 moles NaOH) was slowly added to the flask, maintaining a temperature below 90°C. At the completion of the NaOH addition, 20 grams of deionized water was added to rinse the remaining sodium hydroxide to the flask. In the meantime, a monomer solution of 230.2 grams (3.19 moles) of glacial acrylic acid was added to a graduated cylinder for addition to the flask. An initiator solution of 2.1 grams of sodium persulfate dissolved in 20 grams of deionized water was mixed and 16.94 grams of 35% hydrogen peroxide was added to the sodium persulfate solution, mixed well and added to a syringe for addition to the kettle. A monomer pre-charge solution of 22.81 (0.316 moles) grams of glacial Acrylic Acid was placed in a vial and set aside. An initiator pre-charge solution was prepared by dissolving 1.48 grams of sodium persulfate dissolved in 8 grams of deionized water and adding 7.33 grams of 35% hydrogen peroxide, and set aside. A promoter solution of 4.5 grams of a 0.15% iron sulfate heptahydrate solution was added to a vial and set aside.
Once the kettle contents reached reaction temperature of 91 °C, the promoter solution was added, followed by the acrylic acid pre-charge. After 1 minute, the initiator pre-charge solution was added to the kettle. The expected exotherm of 2 - 5 °C was observed within 5 minutes. One minute after peak exotherm, the monomer and initiator cofeeds began and added linearly and separately over 120 minutes at 91-93°C. At the completion of the feeds, 12 grams and 4 grams of deionized water were added to the monomer and initiator feed vessels, respectively as rinses. The reaction was held for 20 minutes at 91°C. The resulting theoretical end of feed solid was 51.2%. In the meantime, the a chase promoter solution of 4.5 grams of a 0.15% iron sulfate heptahydrate solution and 80 grams of deionized water was mixed and set aside. The chaser solution of 0.5 grams of sodium persulfate dissolved in 5 grams of deionized water and adding 1.42 grams of 35% hydrogen peroxide, and set aside. After 20 minute hold, the promoter solution was added to the kettle and the persulfate / peroxide solution was added to the kettle over 5 minutes. The reaction was then held for another 30 minutes. During the hold, the following solution was prepared: a scavenger solution of 11.4 grams of sodium metabisulfite dissolved in 32 grams of deionized water. After the 30 minute hold, 170 grams of deionized water was added to the kettle and cooling to 80°C was begun. The scavenger solution was then added to the kettle over 12 minutes with no external heat being applied. At the completion of the scavenger feed, the reaction was cooled to 50°C, during which time 1.0 grams of 35% hydrogen peroxide was added to the kettle to scavenge any residual bisulfite. At 50°C a solution of 156.9 grams of 50% sodium hydroxide was added slowly to the kettle, keeping the temperature below 70°C. A rinse of 28 gram of deionized water was then added to the sodium hydroxide funnel. The reaction was then cooled and packaged.

The final characteristics for this polymer are as follows:

**Table 5**

| | |
|---|---|
| % Solids | 40.72% |
| pH | 6.51 |
| Residual acrylic acid | <1 ppm |
| Residual maleic acid | 66.5 ppm |
| Residual fumaric acid | <1 ppm |
| Mw | 170550 daltons |
| Mn | 8962 daltons |

### Example #4 (Weight % Composition: 60% Acrylic Acid /40% Maleic Acid)

The example #5 was repeated, with the following differences: The initiator cofeed solution was prepared by dissolving 2.1 grams of sodium persulfate in 20 grams of deionized water and 25.4 grams of 35% hydrogen peroxide was added and mixed, then added to a syringe for addition to the kettle. The theoretical end of feed solid was 51.1%. (The measured end of feeds solids was 52.5%).

The final characteristics for this polymer are as follows:

**Table 6**

| | |
|---|---|
| % Solids | 39.96% |
| pH | 6.07 |
| Residual acrylic acid | <1 ppm |
| Residual maleic acid | 63.1 ppm |
| Residual fumaric acid | <1 ppm |
| Mw | 95300 daltons |
| Mn | 6227 daltons |

### Example #5 (Weight % Composition: 50% Acrylic Acid /50% Maleic Acid)

To a two liter round bottom flask, equipped with a mechanical stirrer, heating mantle, thermocouple, condenser and inlets for the addition of monomer and initiator was charged 181.4 grams (1.85 moles) of maleic anhydride and 172 grams of deionized water. The mixture was set to stir and 296.1 grams of 50% sodium hydroxide in water (3.70 moles NaOH) was slowly added to the flask, maintaining a temperature below 90°C. At the completion of the NaOH addition, 20 grams of deionized water was added to rinse the remaining sodium hydroxide to the flask. In the meantime, a monomer solution of 194.74 grams (2.70 moles) of glacial acrylic acid was added to a graduated cylinder for addition to the flask. An initiator solution of 2.1 grams of sodium persulfate dissolved in 20 grams of deionized water was mixed and 9.13 grams of 35% hydrogen peroxide was added to the sodium persulfate solution, mixed well and added to a syringe for addition to the kettle. A monomer pre-charge solution of 19.26 (0.267 moles) grams of glacial acrylic acid was placed in a vial and set aside. An initiator pre-charge solution was prepared by dissolving 1.48 grams of sodium persulfate dissolved in 8 grams of deionized water and adding 2.93 grams of 35% hydrogen peroxide, and set aside. A promoter solution of 4.5 grams of a 0.15% iron sulfate heptahydrate solution was added to a vial and set aside. Once the kettle contents reached reaction temperature of 91 °C, the promoter solution was added, followed by the acrylic acid pre-charge. After 1 minute, the initiator pre-charge solution was added to the kettle. The expected exotherm of 2 - 5 °C was observed within 5 minutes. One minute after peak exotherm, the monomer and initiator cofeeds began and added linearly and separately over 120 minutes at 91-93°C. At the completion of the feeds, 12 grams and 4 grams of deionized water were added to the monomer and initiator feed vessels, respectively as rinses. The reaction was held for 20 minutes at 91 °C. The resulting theoretical end of feed solid was 54.6%. In the meantime, the a chase promoter solution of 9.0 grams of a 0.15% iron sulfate heptahydrate solution and 80 grams of deionized water was mixed and set aside. The chaser solution of 0.5 grams of sodium persulfate dissolved in 5 grams of deionized water and adding 1.42 grams of 35% hydrogen peroxide, and set aside. After 20 minute hold, the promoter solution was added to the kettle and the persulfate / peroxide solution was added to the kettle over 5 minutes. The reaction was then held for another 30 minutes. During the hold, the following solution was prepared: a scavenger solution of 11.4 grams of sodium metabisulfite dissolved in 32 grams of deionized water. After the 30 minute hold, 268 grams of deionized water was added to the kettle and cooling to 80°C was begun. The scavenger solution was then added to the kettle over 12 minutes with no external heat being applied. At the completion of the scavenger feed, the reaction was cooled to 50°C, during which time 1.0 grams of 35% hydrogen peroxide was added to the kettle to scavenge any residual bisulfite. At 50°C a solution of 133 grams of 50% sodium hydroxide was added slowly to the kettle, keeping the temperature below 70°C. A rinse of 28 gram of deionized water was then added to the sodium hydroxide funnel. The reaction was then cooled and packaged.

The final characteristics for this polymer are as follows:

**Table 7**

| | |
|---|---|
| % Solids | 37.13% |
| pH | 7.36 |
| Residual acrylic acid | <1 ppm |
| Residual maleic acid | 984 ppm |
| Residual fumaric acid | 630 ppm |
| Mw | 112940 daltons |
| Mn | 3289 daltons |

## Claims

1. A process for the manufacture of high molecular weight aliphatic dicarboxylic acid copolymers comprising:
i) providing at least one dicarboxylic acid monomer;
ii) providing at least one α,β-ethylenically unsaturated monomer selected from the group consisting of:
(a) a monocarboxylic acid having from 3 to 10 carbon atoms and the alkali metal and ammonium salts thereof;
(b) an organic sulfonic acid compound and the alkali metal and ammonium salts thereof;
(c) a vinyl monomer free of carboxyl and sulfonic acid groups; and
(d) mixtures of said (a), (b) and (c);
iii) providing at least one transition metal ion, selected from the group consisting of Zn²⁺, Co³⁺, Co²⁺, Cu²⁺, Mo²⁺, Fe³⁺, Fe²⁺, Cr³⁺, Ni²⁺, Ce⁴⁺ and Ce²⁺, and mixtures thereof, in a concentration of from 0.5 to 100 ppm, based on the total aqueous polymerization system, including monomers and initiator;
iv) feeding the at least one dicarboxylic acid, α,β-ethylenically unsaturated monomer, and an initiator into a reaction vessel wherein the pH in the reaction vessel ranges from 9.5 to 7.5
v) reacting the at least one dicarboxylic acid, α,β-ethylenically unsaturated monomer, and initiator; and
vi) producing a copolymer of aliphatic dicarboxylic acids having a calculated end of feeds solid content ranging from 46 to 60 % and a weight average molecular weight from 70,000 to 180,000 daltons, as measured by gel permeation chromatography (GPC) using polyacrylic acid standards, and having a residual content ranging from 4000 to 0 ppm, the residual content being the total amount by weight of unreacted dicarboxylic acid divided by the total weight of the reaction mixture expressed in parts per million.

2. The process according to claim 1 in wherein the at least one dicarboxylic acid, α,β-ethylenically unsaturated monomer, and an initiator is fed over a period of less than or equal to 3 hours.

3. The process of claim 1 wherein the pH at the end of feeding the at least one dicarboxylic acid, α,β-ethylenically unsaturated monomer, and an initiator ranges from 4 to 5.5.

4. The process according to claim 1 wherein the initiator is selected from the group consisting of hydrogen peroxide, t-butylhydroperoxide, sodium persulfate, potassium persulfate, ammonium persulfate, and 2,2¹ -azobis(2-amidinopropane)hydrochloride, and is present in an amount of from 0.5 to 5 percent by weight of total monomers.

5. The process according to claim 1 wherein the dicarboxylic acid monomer is maleic acid, a monoalkali metal maleate or a monoammonium maleate.

6. The process according to claim 1 wherein from 0.5 to 10 ppm of the transition metal ion is present.

## Patentansprüche

1. Ein Verfahren zur Herstellung von aliphatischen Dicarbonsäure-Copolymeren mit hohem Molekulargewicht, das Folgendes beinhaltet:
i) Bereitstellen mindestens eines Dicarbonsäure-Monomers;
ii) Bereitstellen mindestens eines α,β-ethylenisch ungesättigten Monomers, ausgewählt aus der Gruppe, die aus Folgendem besteht:
(a) einer Monocarbonsäure mit 3 bis 10 Kohlenstoffatomen und den Alkalimetall- und Ammoniumsalzen davon;
(b) einer organischen Sulfonsäureverbindung und den Alkalimetall- und Ammoniumsalzen davon;
(c) einem Vinylmonomer, das frei von Carbon- und Sulfonsäuregruppen ist; und
(d) Mischungen aus (a), (b) und (c);
iii) Bereitstellen mindestens eines Übergangsmetallions, ausgewählt aus der Gruppe, bestehend aus Zn²⁺, Co³⁺, Co²⁺, Cu²⁺, Mo²⁺, Fe³⁺, Fe²⁺, Cr³⁺, Ni²⁺, Ce⁴⁺ und Ce²⁺, und Mischungen daraus, in einer Konzentration von von 0,5 bis 100 ppm basierend auf dem gesamten wässrigen Polymerisationssystem einschließlich Monomere und Initiator;
iv) Einspeisen der mindestens einen Dicarbonsäure, des mindestens einen α,β-ethylenisch ungesättigten Monomers und eines Initiators in ein Reaktionsgefäß, wobei der pH in dem Reaktionsgefäß von 9,5 bis 7,5 reicht
v) Reagierenlassen der mindestens einen Dicarbonsäure, des mindestens einen α,β-ethylenisch ungesättigten Monomers und Initiators; und
vi) Produzieren eines Copolymers aus aliphatischen Dicarbonsäuren, mit einem berechneten Endeinspeisungsfeststoffgehalt, der von 46 bis 60 % reicht, und einem Gewichtsmittel des Molekulargewichts von 70000 bis 180000 Dalton, wie durch Gel-Permeations-Chromatographie (GPC) unter Verwendung von Polyacrylsäure-Standards gemessen, und einem von 4000 bis 0 ppm reichenden Restgehalt, wobei der Restgehalt die Gesamtgewichtsmenge von unreagierter Dicarbonsäure geteilt durch das Gesamtgewicht der Reaktionsmischung ausgedrückt in Teilen pro Million ist.

2. Verfahren gemäß Anspruch 1, in wobei die mindestens eine Dicarbonsäure, das mindestens eine α,β-ethylenisch ungesättigte Monomer und ein Initiator über einen Zeitraum von weniger als oder gleich 3 Stunden eingespeist werden.

3. Verfahren gemäß Anspruch 1, wobei der pH bei Ende der Einspeisung der mindestens einen Dicarbonsäure, des mindestens einen α,β-ethylenisch ungesättigten Monomers und eines Initiators von 4 bis 5,5 reicht.

4. Verfahren gemäß Anspruch 1, wobei der Initiator aus der Gruppe ausgewählt ist, die aus Wasserstoffperoxid, t-Butylhydroperoxid, Natriumpersulfat, Kaliumpersulfat, Ammoniumpersulfat und 2,2¹-Azobis(2-amidinopropan)hydrochlorid besteht, und in einer Menge von von 0,5 bis 5 Gewichtsprozent der gesamten Monomere vorhanden ist.

5. Verfahren gemäß Anspruch 1, wobei das Dicarbonsäure-Monomer Maleinsäure, ein Monoalkalimetallmaleat oder ein Monoammoniummaleat ist.

6. Verfahren gemäß Anspruch 1, wobei von 0,5 bis 10 ppm des Übergangsmetallions vorhanden sind.

## Revendications

1. Un procédé pour la fabrication de copolymères d'acide dicarboxylique aliphatique de masse moléculaire élevée comprenant :
i) fournir au moins un monomère d'acide dicarboxylique ;
ii) fournir au moins un monomère à insaturation α,β-éthylénique sélectionné dans le groupe consistant en :
(a) un acide monocarboxylique ayant de 3 à 10 atomes de carbone et les sels de métal alcalin et d'ammonium de celui-ci ;
(b) un composé d'acide sulfonique organique et les sels de métal alcalin et d'ammonium de celui-ci ;
(c) un monomère vinylique dépourvu de groupes acides carboxyles et sulfoniques ; et
(d) des mélanges desdits (a), (b) et (c) ;
iii) fournir au moins un ion de métal de transition, sélectionné dans le groupe consistant en Zn²⁺, Co³⁺, Co²⁺, Cu²⁺, Mo²⁺, Fe³⁺, Fe²⁺, Cr³⁺, Ni²⁺, Ce⁴⁺ et Ce²⁺, et des mélanges de ceux-ci, dans une concentration allant de 0,5 à 100 ppm, rapporté au système de polymérisation aqueuse total, incluant des monomères et un amorceur ;
iv) approvisionner cet au moins un acide dicarboxylique, cet au moins un monomère à insaturation α,β-éthylénique et un amorceur dans une cuve de réaction où le pH dans la cuve de réaction va de 9,5 à 7,5
v) faire réagir cet au moins un acide dicarboxylique, cet au moins un monomère à insaturation α,β-éthylénique et l'amorceur ; et
vi) produire un copolymère d'acides dicarboxyliques aliphatiques ayant une extrémité calculée de teneur solide en apports allant de 46 à 60 % et une masse moléculaire de masse moyenne allant de 70 000 à 180 000 daltons, telle que mesurée par chromatographie sur gel (GPC) à l'aide d'étalons d'acide polyacrylique, et ayant une teneur résiduelle allant de 4 000 à 0 ppm, la teneur résiduelle étant la quantité totale en poids d'acide dicarboxylique non réagi divisée par le poids total du mélange de réaction exprimé en parties par million.

2. Le procédé selon la revendication 1 dans dans lequel cet au moins un acide dicarboxylique, cet au moins un monomère à insaturation α,β-éthylénique et un amorceur sont approvisionnés sur une période inférieure ou égale à 3 heures.

3. Le procédé de la revendication 1 dans lequel le pH à la fin de l'approvisionnement en cet au moins un acide dicarboxylique, cet au moins un monomère à insaturation α,β-éthylénique et un amorceur va de 4 à 5,5.

4. Le procédé selon la revendication 1 dans lequel l'amorceur est sélectionné dans le groupe consistant en peroxyde d'hydrogène, t-butylhydroperoxyde, persulfate de sodium, persulfate de potassium, persulfate d'ammonium, et 2,2¹-azobis(2-amidinopropane)hydrochloride, et est présent dans une quantité allant de 0,5 à 5 pour cent en poids de la totalité des monomères.

5. Le procédé selon la revendication 1 dans lequel le monomère d'acide dicarboxylique est de l'acide maléique, un maléate de métal monoalcalin ou un maléate monoammonium.

6. Le procédé selon la revendication 1 dans lequel de 0,5 à 10 ppm du ion de métal de transition est présent.
